## Europäisches Patentamt
## European Patent Office
## Office européen des brevets

(19)

(11) Numéro de publication: **0 070 820**
**A1**

(12) # DEMANDE DE BREVET EUROPEEN

(21) Numéro de dépôt: **82870041.9**

(51) Int. Cl.³: **A 01 G 9/12,** A 01 G 13/00

(22) Date de dépôt: **09.07.82**

---

(30) Priorité: **14.07.81 BE 889627**

(43) Date de publication de la demande: **26.01.83**
**Bulletin 83/4**

(84) Etats contractants désignés: **DE FR GB IT LU NL SE**

(71) Demandeur: **Beghain, René, rue du Limbourg 37, B-4000 Liège (BE)**

(72) Inventeur: **Beghain, René, rue du Limbourg 37, B-4000 Liège (BE)**

(74) Mandataire: **Dellicour, Paul, Office de Brevets E. Dellicour rue Fabry 18/012, B-4000 Liège (BE)**

---

(54) **Dispositif de protection pour plantes rampantes, particulièrement pour fraisiers.**

(57) Le dispositif consiste en une bande de matière plastique (1), dont la largeur est légèrement plus grande que la distance habituelle entre deux plantes de lignes voisines et qui est pourvue, d'une part, sur ses bords longitudinaux d'encoches (2) destinées à venir entourer partiellement chaque plant de deux lignes voisines, ces encoches (2) étant régulièrement espacées et disposées de manière correspondante sur les deux bords de la bande, et, d'autre part, sur la ligne médiane longitudinale de trous d'aération (3) décalés longitudinalement par rapport auxdites encoches (2). Deux bandes voisines se recouvrent légèrement pour former avec leurs encoches (2) correspondantes des cercles complets destinées à entourer complètement les plantes.

EP 0 070 820 A1

- 1 -

Dispositif de protection pour plantes rampantes, particulièrement pour fraisiers.

La présente invention est relative à un dispositif de protection à appliquer au sol autour de plantes rampantes, telles que des fraisiers.

Dans la culture de plantes rampantes divers problèmes se posent dûs par exemple aux difficultés d'élimination des mauvaises herbes, à la prolifération des limaces ou encore aux jets qui reprennent dans le sol.

L'invention a pour but de résoudre ces divers problèmes et d'améliorer encore la culture des fraisiers, entre autres, et un dispositif de protection conforme à l'invention consiste en une bande de matière plastique, dont la largeur est légèrement plus grande que la distance habituelle entre deux plants de lignes voisines et qui est pourvue, d'une part, sur ses bords longitudinaux d'encoches destinées à venir entourer partiellement chaque plant de deux lignes voisines, ces encoches étant régulièrement espacées et disposées de manière correspondante sur les deux bords de la bande, et, d'autre part, sur la ligne médiane longitudinale de trous d'aération décalés longitudinalement par rapport auxdites encoches.

L'invention est décrite maintenant sur la base du dessin

- 2 -

annexé, à titre d'exemple uniquement, montrant en :

Figure 1 une vue en plan d'une section de bande plastique constituant le dispositif de protection suivant l'invention, et

Figure 2 une vue en plan du dispositif de protection, conforme à l'invention, appliqué à une culture de fraisiers.

Un dispositif de protection pour plantes rampantes tel que décrit ici consiste en une bande de matière plastique 1, dont la largeur est un peu plus grande que la distance normale entre deux plants. Ainsi, par exemple, dans une culture de fraisiers les plants sont normalement distants entre eux de 30 cm et les lignes de plants ont la même distance entre elles. La bande de plastique a alors avantageusement dans ce cas une largeur de 33 cm, comme il sera expliqué ci-après.

Sur les deux bords longitudinaux de cette bande sont prévues des encoches 2 régulièrement espacées l'une de l'autre et se faisant face sur les deux bords. La distance entre deux encoches sur un même bord dépend également de la distance des plants entre eux et on a donc avantageusement ici aussi, dans le cas cité plus haut, 32 cm de centre à centre et une largeur d'encoche de 8 cm.

La bande 1 est encore pourvue sur sa ligne médiane longitudinale de trous d'aération 3, pour lesquels on peut choisir un diamètre de 15 cm. Ces trous 3 sont décalés par rapport aux encoches 2 pour se trouver au centre de quatre encoches.

Comme une encoche 2, associée à une encoche 2 correspondante d'une bande voisine, est destiné à entourer un plant, le fond de l'encoche est constitué par un demi-cercle et les deux demi-cercles desdites encoches correspondantes vont former un cercle pour envelopper complètement le plant. Le surplus de la largeur des bandes, dont question ci-dessus, sert à leur recouvrement mutuel.

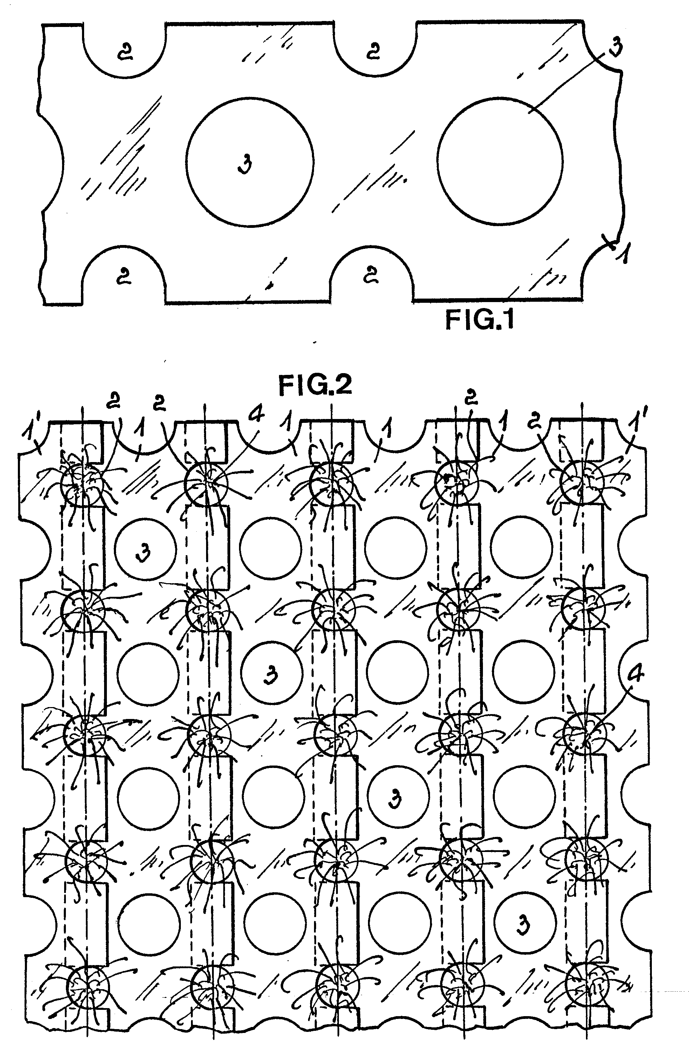

Dès que les fraisiers 4 sont en fleurs, après un bon binage, un nettoyage et un aplatissage du terrain, on applique une bande de plastique 1 entre deux lignes de plants de telle manière que les encoches 2 viennent embrasser les plants de chacune des lignes. Entre chacune de ces deux lignes et leur ligne voisine on applique une autre bande de plastique 1, de telle manière qu'ici aussi les encoches 2 viennent embrasser les plants de chacune des lignes. Dans la ligne de plants déjà entourés par les encoches de la première bande les encoches correspondantes de l'autre bande vont venir s'associer aux premières encoches pour encercler complètement chaque plant. Du fait de la largeur des bandes, légèrement plus grande que la distance entre deux plants, les bords de deux bandes voisines se superposent pour obtenir un bon recouvrement. On pratique de la même façon pour toutes les lignes et, en bordure du champ, on utilise avantageusement les mêmes bandes plastiques mais coupées en deux dans leur largeur, comme indiqué par 1' en figure 2. Lorsque tout le tapis plastique est placé, il est proposé de marcher dessus en travers des lignes pour une bonne jonction des recouvrements des bandes.

Les trous d'aération 3 sont répartis de telle manière qu'ils laissent subsister suffisamment de matière pour pouvoir se déplacer sur le terrain en marchant sur la bande sans pratiquement se salir. Ces trous servent également à l'évaporation de l'eau, qui y est amenée par des petites rigoles se formant dans le tapis, du fait de la distance entre les encoches légèrement supérieure à la distance entre plants. Avec un terrain bien plat, le tapis plastique est toujours sec. Si le terrain n'est pas parfaitement plat, l'écart entre les distances, comme indiqué ci-dessus, sert aussi à compenser ces irrégularités.

Grâce à tel dispositif de protection le terrain est plus propre du fait de l'élimination des mauvaises herbes, les jets ne reprennent plus dans le sol et on élimine une bonne partie des limaces. Ce dispositif a encore d'autres avantages, il protège par le bruit de la matière plastique les fraisiers contre les oiseaux, les fraisiers restent propres, les fraises mûrissent plus vite à cause de la réverbération du soleil sur la matière plastique, il est peu coûteux parce que facile à réaliser dans une matière bon marché et il peut se conserver pour être réutilisé l'année suivante.

Après la cueillette des fraises il suffit d'enlever les bandes plastiques pour que les jets prennent racine dans le sol.

Comme il a été dit plus haut, la bande plastique comporte des encoches et des trous. Suivant une réalisation avantageuse ces encoches et ces trous peuvent ne pas être découpés mais avoir simplement leurs bords perforés. Ceci facilite la vente et la manipulation de telles bandes en rouleau, pouvant se vendre au mètre.

Revendications

1. Dispositif de protection pour plantes rampantes, telles que des fraisiers, caractérisé en ce qu'il consiste en une bande de matière plastique (1), dont la largeur est légèrement plus grande que la distance habituelle entre deux plants de lignes voisines et qui est pourvue, d'une part, sur ses bords longitudinaux d'encoches (2) destinées à venir entourer partiellement chaque plant de deux lignes voisines, ces encoches étant régulièrement espacées et disposées de manière correspondante sur les deux bords de la bande, et, d'autre part, sur la ligne médiane longitudinale de trous d'aération (3) décalés longitudinalement par rapport auxdites encoches.

2. Dispositif de protection suivant la revendication 1, caractérisé en ce que les encoches (2) dans une même ligne de plants sont disposées à une distance légèrement supérieure à la distance des plants dans la ligne.

3. Dispositif de protection suivant la revendication 1, caractérisé en ce que le fond des encoches (2) est conformé en demi-cercle, dont le centre correspond à l'emplacement d'un plant, et en ce que deux bandes voisines (1) se recouvrent légèrement pour former avec leurs encoches correspondantes (2) des cercles complets destinés à entourer complètement les plants.

4. Dispositif de protection suivant l'une quelconque des revendications 1 à 3, caractérisé en ce que pour les bordures du terrain cultivé il consiste en des demi-bandes longitudinales (1') comportant sur un bord les encoches (2) et sur l'autre bord des demi-trous d'aération.

5. Dispositif de protection suivant l'une quelconque des revendications 1 à 4, caractérisé en ce que les bords des encoches (2) et les bords des trous d'aération (3) sont simplement perforés.

FIG.1

FIG.2

**Office européen des brevets**

## RAPPORT DE RECHERCHE EUROPEENNE

EP 82 87 0041.9

| Catégorie | Citation du document avec indication, en cas de besoin, des parties pertinentes | Revendica-tion concernée |
|---|---|---|
| A | GB - A - 631 297 (J.H.A. DRAPER)<br>* totalité du document *<br>-- -- | 1,3,4 |
| A | DE - U - 1 821 954 (CH. DE BLONAY et al.)<br>* page 2; fig. 1 *<br>-- -- | 1 |
| A | FR - A - 1 589 499 (R. DE SINETY)<br>-- | |
| A | US - A - 3 580 196 (E.A. LOFGREEN)<br>---- | |

**DOCUMENTS CONSIDERES COMME PERTINENTS**

**CLASSEMENT DE LA DEMANDE (Int. Cl. 3)**

A 01 G 9/12

A 01 G 13/00

**DOMAINES TECHNIQUES RECHERCHES (Int. Cl. 3)**

A 01 G 9/12

A 01 G 13/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

X | Le présent rapport de recherche a été établi pour toutes les revendications

| Lieu de la recherche | Date d'achevement de la recherche | Examinateur |
|---|---|---|
| Berlin | 10-09-1982 | SCHOFER |

OEB Form 1503.1 06.78